(19)

Europäisches Patentamt

European Patent Office

Office européen des brevets

(11) **EP 4 177 057 A1**

(12) **EUROPEAN PATENT APPLICATION**

(43) Date of publication:
**10.05.2023 Bulletin 2023/19**

(21) Application number: **21206752.4**

(22) Date of filing: **05.11.2021**

(51) International Patent Classification (IPC):
**B41C 1/02** *(2006.01)*    **B44B 5/00** *(2006.01)*
**B29C 45/37** *(2006.01)*    B41C 1/05 *(2006.01)*

(52) Cooperative Patent Classification (CPC):
**B41C 1/02; B29C 45/372; B29C 45/374;**
**B44B 5/026;** B41C 1/05; B44C 1/228

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Boegli-Gravures S.A.**
**2074 Marin-Epagnier (CH)**

(72) Inventors:
• **BOEGLI, Charles**
  **2074 Marin-Epagnier (CH)**
• **DUMITRU, Gabriel**
  **5415 Nussbaumen (CH)**

(74) Representative: **Weihs, Bruno Konrad et al**
**André Roland SA**
**IP Attorneys & Services**
**Avenue Collonges 21**
**1004 Lausanne (CH)**

(54) **METHOD FOR ENGRAVING CODE PATTERNS IN A SOLID PIECE'S TOOL SURFACE**

(57)    A method for engraving a solid piece's tool surface with a plurality of code patterns of structures, wherein the plurality of code patterns comprises a first code pattern comprising first structures (205) with lateral sizes and pitches respectively in a range of 20 to 500 $\mu$m; a second code pattern comprising second structures (208) with lateral sizes and pitches each in a range of 1 to 20 $\mu$m; and a third code pattern comprising third structures (212) with lateral sizes and pitches each in a range of 0.2 to 5 $\mu$m. The method comprises providing a virgin base surface on the solid piece's tool surface; polishing the virgin base surface to obtain a polished base surface (202); depositing a hard layer (209) on the polished base surface (202); engraving the third code pattern in the hard layer (209). The method comprises engraving the first code pattern and the second code pattern before the step of depositing the hard layer (209), wherein the hard layer (209) reproduces the topography of the first code pattern and the second code pattern.

Figure 2-6

EP 4 177 057 A1

# Description

## Technical field

The invention relates to a method for engraving of a solid piece's tool surface with at least first, second and third code patterns that comprise respectively corresponding first, second and third structures, wherein the lateral sizes and pitches fall in specific ranges of values depending on the first, second and third code pattern.

## Background

It is known to manufacture an embossing tool having an embossing tool surface and embossing structures on the tool surface, with sizes of the structures in a range equal or below 1 μm. Such structures will be referred to as microstructures in the following. International publication WO 2012/1019741 A1 relates to a method for producing an embossing tool in the surface of which embossing structures for the microstructure elements are introduced. The introduction of the embossing structures is made by means of ultra-short laser pulses. The embossing tool surface may be a hardened metallic surface. The embossing structures have a periodic pattern that depends from the wavelength of the laser used to produce them. The periodic pattern is a ripple like grating and may have a period of 500 nm and a depth of several hundreds of nm. However, the embossing structures may not be made to comprise sharp rectangular edges, and the only type of pattern is a grating-like pattern.

The present invention aims to overcome a number of shortcomings of the prior art, and to provide more possibilities to obtain precise and diverse microstructures on a solid piece's tool surface, e.g., an embossing tool surface or a molding tool surface, in addition to having further structures having a size larger in several orders of magnitude than the microstructures.

## Summary of the invention

In a first aspect, the invention provides a method for engraving a solid piece's tool surface with a plurality of code patterns of structures, wherein the plurality of code patterns comprises a first code pattern comprising first structures with lateral sizes and pitches respectively in a range of 20 to 500 μm; a second code pattern comprising second structures with lateral sizes and pitches each in a range of 1 to 20 μm; and a third code pattern comprising third structures with lateral sizes and pitches each in a range of 0.2 to 5 μm. The method comprises providing a virgin base surface on the solid piece's tool surface; polishing the virgin base surface to obtain a polished base surface; depositing a hard layer on the polished base surface; engraving the third code pattern in the hard layer. The method comprises engraving the first code pattern and the second code pattern before the step of depositing the hard layer, wherein the hard layer reproduces the topography of the first code pattern and the second code pattern.

In a preferred embodiment, the engraved solid piece's tool surface has a cylindrical symmetry; and is configured for a transfer of the first, second, and third code pattern's first, second and third structures into a substrate, whereby the transfer is any one from the list comprising: shaping, printing, molding, crafting, pressing, embossing onto or into the substrate.

In a further preferred embodiment, the engraved solid piece's tool surface is configured to be used as a forming tool, for a transfer of the first, second, and third code pattern's first, second and third structures into a substrate, whereby the transfer is any one from the list comprising: printing, molding, crafting, pressing, embossing into the substrate.

In a further preferred embodiment, the step of engraving the first code pattern and the second code pattern comprises engraving by means of an ultrashort-pulsed laser beam focused on the polished base surface providing from a laser operating between 100 kHz and 10 MHz with an average power between 1 W and 500 W. In a further preferred embodiment, the step of engraving the third code pattern in the hard layer involves a laser and a mask projection of third structures by the laser on the hard layer, corresponding to the third code pattern to be engraved.

In a further preferred embodiment, the step of engraving the third code pattern in the hard layer involves a laser and a beam splitting device yielding a plurality of foci to engrave third structures into the hard layer corresponding to the third code pattern to be engraved.

In a second aspect, the invention provides a method for engraving a solid piece's tool surface with a plurality of code patterns of structures, wherein the plurality of code patterns comprises a first code pattern comprising first structures with lateral sizes and pitches each in a range of 20 to 500 μm; a second code pattern comprising second structures with lateral sizes and pitches each in a range of 1 to 20 μm; and a third code pattern comprising third structures with lateral sizes and pitches each in a range of 0.2 to 5 μm. The method comprises providing a virgin base surface on the solid piece's tool surface; polishing the virgin base surface to obtain a polished base surface; depositing a hard layer on the polished base surface; engraving the third code pattern in the hard layer; engraving the first code pattern before the step of depositing the hard layer, and engraving the second code pattern through the hard layer into the polished base surface.

In a further preferred embodiment, the engraved solid piece's tool surface has a cylindrical symmetry; and is configured for a transfer of the first, second, and third code pattern's first, second and third structures into a substrate. The transfer is any one from the list comprising: shaping, printing, molding, crafting, pressing, embossing onto or into the substrate.

In a further preferred embodiment, the engraved solid piece's tool surface is configured to be used as a forming tool, for a transfer of the first, second, and third code pattern's first, second and third structures into a substrate, whereby the transfer is any one from the list comprising: printing, molding, crafting, pressing, embossing into the substrate.

In a further preferred embodiment, the step of engraving the first code pattern and the step of engraving the second code pattern each comprise engraving by means of an ultrashort-pulsed laser beam focused on the polished base surface providing from a laser operating between 100 kHz and 10 MHz with an average power between 1 W and 500 W.

In a further preferred embodiment, the step of engraving the third code pattern in the hard layer involves a laser and a mask projection by the laser of third structures on the hard layer, corresponding to the third code pattern to be engraved.

In a further preferred embodiment, the step of engraving the third code pattern in the hard layer involves a laser and a beam splitting device yielding a plurality of foci to engrave third structures into the hard layer corresponding to the third code pattern to be engraved.

In a third aspect, the invention provides an embossing tool with a plurality of code patterns as embossing structures, wherein the plurality of code patterns comprises a first code pattern comprising first structures with lateral sizes and pitches each in a range of 20 to 500 $\mu$m; a second code pattern comprising second structures with lateral sizes and pitches each in a range of 1 to 20 $\mu$m; and a third code pattern comprising third structures with lateral sizes and pitches each in a range of 0.2 to 5 $\mu$m. The embossing tool comprises: a base; a surface of the base configured to have the first and second structures arranged thereon; a hard layer arranged at least on the first structures of the surface of the base; and a surface of the hard layer comprising the third structures thereon.

In a further preferred embodiment, the base is cylindrical.

In a further preferred embodiment, the base comprises a plate that is made of a metallic or composite material.

In a fourth aspect, the invention provides an injection mold with a plurality of code patterns as molding structures, wherein the plurality of code patterns comprises a first code pattern comprising first structures with lateral sizes and pitches each in a range of 20 to 500 $\mu$m; a second code pattern comprising second structures with lateral sizes and pitches each in a range of 1 to 20 $\mu$m; and a third code pattern comprising third structures with lateral sizes and pitches each in a range of 0.2 to 5 $\mu$m. The injection mold comprises a base; a surface of the base configured to have the first and second structures arranged therein; a hard-layer arranged on at least the first structures of the surface of the base; and a surface of the hard-coating layer comprising the third structures thereon.

In a fifth aspect, the invention provide a method for authenticating a surface-structured product bearing first, second and/or third code pattern zones on the surface of the product, wherein the first code pattern comprises first structures with lateral sizes and pitches each in a range of 20 to 500 $\mu$m; the second code pattern comprises second structures with lateral sizes and pitches each in a range of 1 to 20 $\mu$m; and the third code pattern comprises third structures with lateral sizes and pitches each in a range of 0.2 to 5 $\mu$m. The method comprises steps of: capturing an image from a first code pattern zone on the product comprising at least one first code pattern, with a camera that is associated with a first data-processing device; analyzing the captured image at the first data-processing device and retrieving the information contained in the at least one first code pattern according to a first encoding algorithm; capturing an image from a second code pattern zone on the product comprising at least one second code pattern with a camera that is completed by an auxiliary optical means, and which is associated with the first data-processing device; analyzing the captured image at the first data-processing device and retrieving the information contained in the least one second code pattern according to a second encoding algorithm; and illuminating at least a part of a third code pattern zone comprising at least one third code pattern, with a reading beam and using a reading screen to receive the reading beam projected through the or reflected by the at least one third code pattern to retrieve the information contained in the third code pattern.

Brief description of the drawings

The invention will be better understood through the detailed description of preferred embodiments and in light of the appended drawings, wherein

figure 1 contains a flowchart illustrating a method for engraving an embossing tool surface according to an example embodiment of the invention;

figures 2-1 to 2-6 illustrate different stages of engraving of a cylindrical embossing tool with an example method according to the invention;

figure 3 contains a schematic representation of a production line for manufacturing an embossing tool surface according to an even further example embodiment of the inventive method;

figure 4 contains a flowchart illustrating a method for engraving an embossing tool surface according to a further example embodiment of the invention;

figures 5-1 to 5-6 illustrate different stages of engraving of a cylindrical embossing tool with an example method according to the invention;

figure 6 contains a schematic representation of a production line for manufacturing an embossing tool surface according to an even further example embodiment of the inventive method;

figure 7 shows a schematic representation of a laser engraving machine for engraving a roller tool having a cylindrical geometry;

figure 8 shows a schematic representation of a further laser engraving machine for freeform surfaces;

figure 9 shows a schematic representation of an even further laser engraving machine for a solid piece's tool surface;

figure 10 schematically explains multiplicative modulation according to examples of the invention;

figure 11 schematically explains z-offsetting modulation according to an example of the invention;

figure 12 schematically explains an additive modulation according to examples of the invention;

figure 13 schematically explains an xy-offsetting modulation according to a further example of the invention;

figure 14 schematically illustrates a foil embossed by means of the inventive method with first, second and third code patterns according to an example embodiment of the invention;

figure 15 illustrates a mold engraved by means of the inventive method and a molded product obtained therewith, the engraving being realized according to an example embodiment of the invention;

figure 16 illustrates a coin like product engraved according to an example embodiment of the inventive method;

figure 17 illustrates a set-up for reading a third code pattern from a foil embossed according to an example method of the invention;

figure 18 schematically illustrates two set-ups for reading a first code pattern and a second code pattern from a product embossed according to an example method of the invention; and

figure 19 schematically illustrates a set-up for reading a coin like product such as the one illustrates in figure 16.

## Detailed description of preferred embodiments

### Glossary

The following defines the meaning of a number of terms used in the present description, unless anyone of these terms is explained differently in a specific context:

**a base surface structure:** an engraved elementary three-dimensional topographical structure, having a base three-dimensional profile, and being engraved into the surface of a material part or a tool;

**a code pattern structure:** an engraved three-dimensional topographical structure, whose three-dimensional profile is the result of applying an element of an encoding algorithm to a base three-dimensional profile;

**a code pattern zone:** a spatially restricted collection of structures comprising base surface structures and code pattern structures, which are spread over the tool surface or the material part surface according to a finite set of positions, determining locations of the base surface structures and of the code pattern structures;

**an encoding algorithm:** a specific operation comprising at least one element and transcribing an information, e.g., alphanumeric or image, in a plurality of identical base surface structures having a base three-dimensional profile to obtain a corresponding code pattern zone;

**a tool:** a material part comprising base surface structures and/or code pattern structures on at least one surface creating a surface structure, the material comprising for example metal, ceramics, in bulk or layer form, and meant to transfer the topography of its surface structure onto another material;

**a roller:** a tool characterized by a cylindrical symmetry, and dimensions of, for example, a length < 5 m, and a diameter < 1 m, profiled with base surface structures and/or with code pattern structure zones organized in at least a code pattern zone on its lateral surface;

**a hard layer:** a thin layer of a thickness below 20 $\mu$m and of a hardness preferably above 0.5 GPa that covers homogenously the surface of a tool, without changing its surface topography;

**embossing:** the process of transferring base surface structures and/or code pattern structures from at least one roller or from a tool onto a viscous fluid or solid substrate or onto another solid piece;

**code reading:** a specific process of retrieving encoded information from any one of the embossed material and the engraved solid piece carrying the code pattern structures;

**polishing:** a specific process of smoothening the surface of a material part or a tool, that is of reducing the peak-to-valley amplitude of its height profile, whereas the maximal peak-to-valley amplitude of its height profile is 0.5 or less from the intended heights of the base and/or the code pattern features;

**a virgin base surface:** the surface of a material part or a tool, before the polishing process;

**a foil:** designates metal foil, polymer foil, paper, laminated paper or hybrids, cardboard, or other thin-sheet product to be embossed with thicknesses < 1 mm.

Example embodiments of the invention

*First aspect*

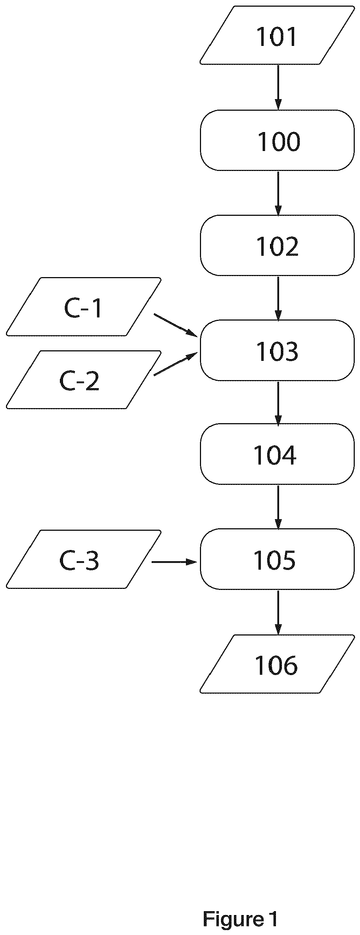

According to the first aspect, the invention provides a method for engraving a solid piece's tool surface **101** with a plurality of code patterns as illustrated in a flowchart of figure 1. In the present example, the solid piece's tool surface is an embossing tool surface, and the plurality of code patterns is engraved as embossing structures, whereby the code patterns comprise

- a first code pattern **C-1** which comprises first structures (not illustrated in figure 1) with lateral sizes and pitches each in a range of 20 to 500 $\mu$m;
- a second code pattern **C-2** which comprises second structures (not illustrated in figure 1) with lateral sizes and pitches each in a range of 1 to 20 $\mu$m; and
- a third code pattern **C-3** which comprises third structures (not illustrated in figure 1) with lateral sizes and pitches each in a range of 0.2 to 5 $\mu$m.

The method comprises providing a virgin base surface **100** on the embossing tool surface **101**. The virgin base surface (not illustrated in figure 1) is a surface that is substantially plane in the sense that it is free of any topographical elements and ready to be treated in the present method for engraving. The virgin base surface may for example be a surface of a flat working piece or a cylindrical surface of a roller working piece. In a next step the method comprises polishing the virgin base surface **102** to obtain a polished base surface. In still a further step **103**, the method comprises engraving the first code pattern **C-1** and the second code pattern **C-2** on the polished base surface. The step **103** is performed prior to a step of depositing a hard layer **104** on the polished base surface. Hence the hard layer is also deposited over the first code pattern **C-1** and over the second code pattern **C-2**, which results in the hard layer also reproducing the topography of the first code pattern **C-1** and the second code pattern **C-2**. In still a further step **105** the method comprises engraving the third code pattern **C-3** in the hard layer and obtain an engraved embossing tool surface **106**.

In a preferred embodiment, the hard layer is a thin layer having a thickness below 20 $\mu$m and a hardness preferably above 0,5 GPa, that covers homogeneously the surface of a solid piece's tool, without changing its surface topography - as explained in the glossary.

In a further preferred embodiment the virgin base surface or the polished base surface may comprise for example metal, or ceramics, in bulk or layer form.

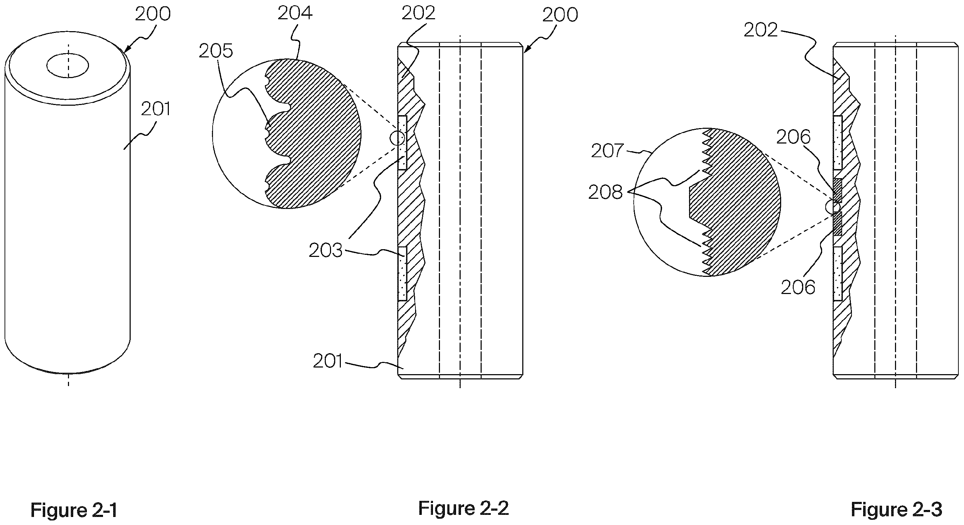

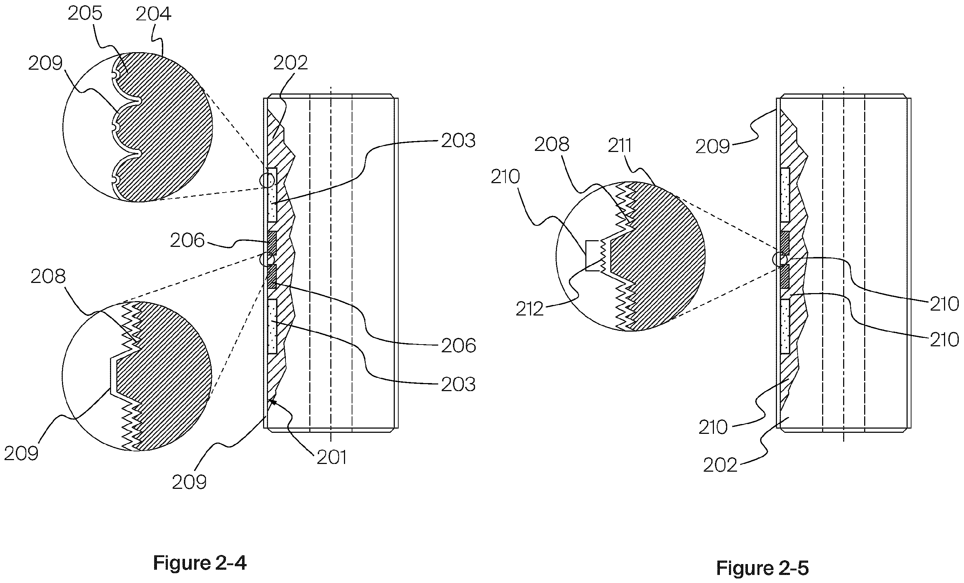

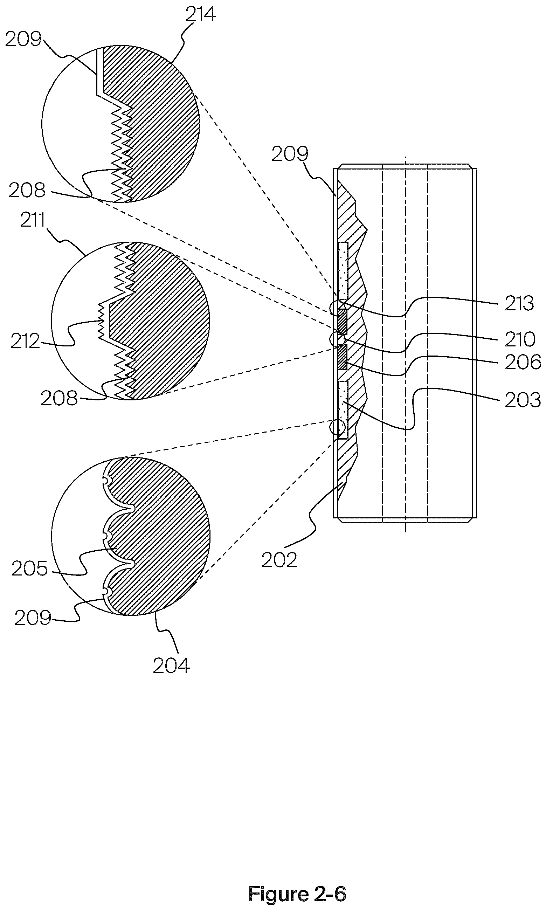

Different stages of the method according to the first aspect as shown in figure 1 are illustrated in an example embodiment as different stages of engraving of a cylindrical embossing tool in figures 2-1 to 2-6.

Figure 2-1 shows the cylindrical embossing tool **200** or roller with the polished base surface **201** obtained from polishing the virgin base surface of the cylindrical embossing tool **200**. In this example, the polished base surface is the cylindrical lateral surface of the cylindrical embossing tool **200**.

Figure 2-2 shows a part **202** of a sectional view of the cylindrical embossing tool **200**. Note that sizes and proportions of elements illustrated in the figures do not correspond to real sizes and/or proportions and have been adapted for a better readability. This sectional view is obtained after partial execution of the previously explained method step **103** of engraving the first code pattern **C-1** on the polished base surface **202**. The first code pattern **C-1** is engraved in a plurality of first zones **203**. An enlarged view **204** at a surface of a first zone **203** shows first structures **205** that are comprised in the first code pattern **C-1**.

Figure 2-3 shows the part **202** after in the method step **103** the engraving of the second code pattern **C-2** has been executed in a plurality of second zones **206**. The second zones **206** are distinct from the first zones **203**. An enlarged view **207** at surfaces of the second zones **206** shows second structures **208** that are comprised in the second code pattern **C-2**.

Figure 2-4 shows the part **202** after the previously explained step of depositing the hard layer **104** has been executed. The hard layer **209** is deposited on the polished base surface **201** and hence covers the first structures **205** in the first zones **203** and the second structures **208** in the second zones **206**, and hence reproduces the topography of the first code pattern **C-1** and the second code pattern **C-2**.

Figure 2-5 shows the part **202** after execution of the previously explained step of engraving the third code pattern **C-3** in the hard layer **209**. The third code pattern **C-3** is engraved in third zones **210** distinct from the first zones **203** and the second zones **206**, meaning that the third zones **210** correspond to parts of the hard layer **209** that do not overlap the first zones **203** and the second zones **206**. A magnified view **211** illustrates the third structures **212** engraved in the third zone **210** corresponding to the magnified view **211**.

Figure 2-6 shows a schematic overview of the part **202** obtained after execution of all the steps of the method according to the first aspect. In this particular example there may be at least one zone **213** in which the hard layer **209** is not engraved with the third structures **212**. A magnified view **214** of a part of the zone **213** adjacent to the zone **206** shows a part of the hard layer **209** without any third structures, and an adjacent part with second structures **208**.

The main advantage according to the first aspect is that the surface of the engraved embossing tool has a full coverage by the hard layer; the chemical properties, the resistance to chemical agents, solvents, cleansing agents, etc. will be given by the properties of the hard layer.

The point to take into consideration for an embodiment according to the first aspect will be the homotheticity; by covering the microscopic code features **C-2** with the hard layer, microscopic shape distortions between the engraved second structures **208** and the engraved second structures **208** coated with the hard layer **209** might occur, yielding a loss in the readability of the code pattern **C-2**.

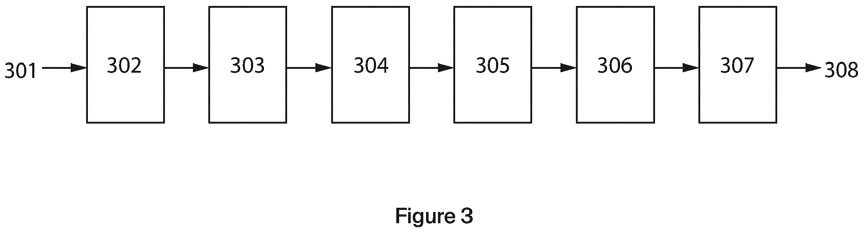

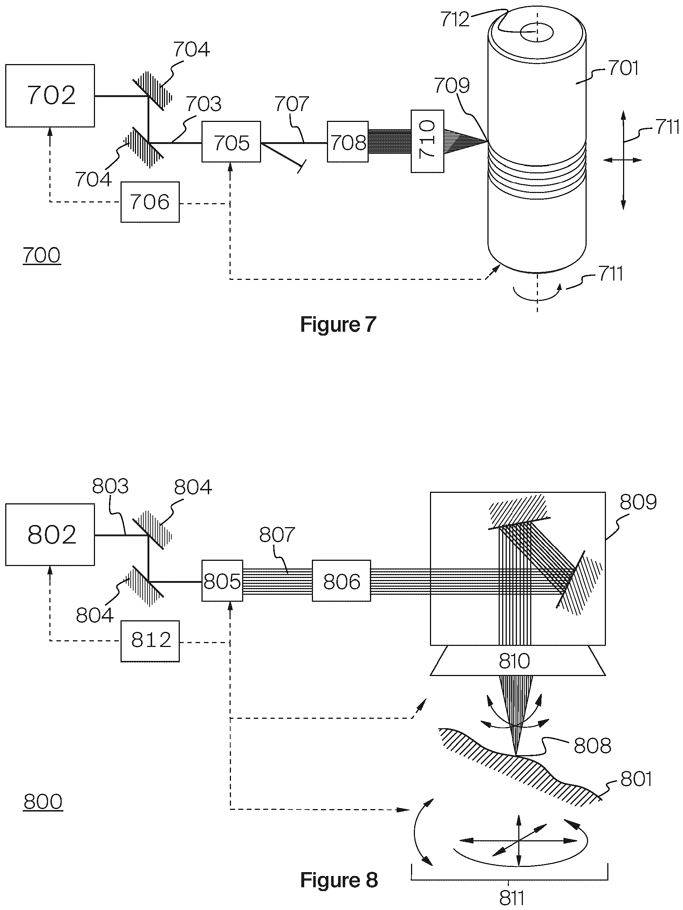

Referring now to figure 3, this contains a schematic representation of a production line for manufacturing an engraved embossing tool surface **308** departing from a virgin surface **301** according to the first aspect of the inventive method. Individual machines in this production line are represented as boxes **302** to **307**, a number of which will be detailed herein below with the example machines illustrated in figures 7 to 9. Generally speaking, the machines in figure 3 are well known in the art and do not require any detailed description. The virgin base surface **301** is treated by means of a polishing machine **302** to obtain a polished base surface. The latter is then subjected to a laser engraving machine **303**, at which the first code pattern and the second code pattern are engraved into the polished base surface. The so engraved polished base surface may then optionally be cleaned by means of a cleaning machine **304** before being subjected to a hard layer deposition machine **305** which deposits a hard layer on the polished base surface which includes the engraved first code pattern and the engraved second code pattern. The hard-layer-carrying polished base surface is then subjected to a further laser engraving machine **306** where the third code pattern is engraved in the hard layer. Finally, an optional plasma etching machine **307** applies a final treatment to obtain the engraved surface **308**.

*Second aspect*

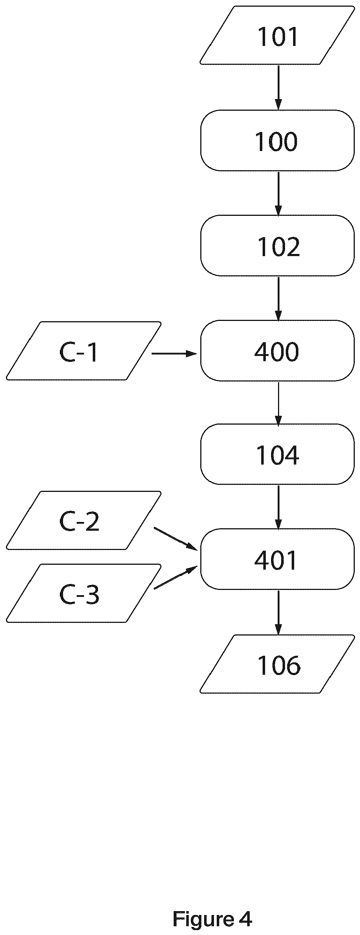

According to the second aspect, the invention provides a method for engraving a solid piece's tool surface, in the present example this is the embossing tool surface **101**, with a plurality of code patterns as illustrated in a flowchart of figure 4. Again, the embossing tool surface **101** is an example of a solid piece's tool surface. The plurality of code patterns is engraved as embossing structures, whereby the code patterns comprise

- the first code pattern **C-1** which comprises first structures (not illustrated in figure 4) with lateral sizes and pitches each in a range of 20 to 500 $\mu$m;
- the second code pattern **C-2** which comprises second structures (not illustrated in figure 4) with lateral sizes and pitches each in a range of 1 to 20 $\mu$m; and
- the third code pattern **C-3** which comprises third structures (not illustrated in figure 4) with lateral sizes and pitches each in a range of 0.2 to 5 $\mu$m.

The method comprises providing the virgin base surface **100** on the embossing tool surface **101**. In the next step the method comprises polishing the virgin base surface **102** to obtain a polished base surface. In still a further step **400**, the method comprises engraving the first code pattern **C-1**. The step **400** is performed prior to the step of depositing a hard layer **104** on the polished base surface. Hence the hard layer is also deposited over the first code pattern **C-1**, which results in the hard layer also reproducing the topography of the first code pattern **C-1**. In still a further step **401** the method comprises engraving the second code pattern **C-2** through the hard layer into the polished base surface, and the third code pattern **C-3** in the hard layer and obtain an engraved embossing tool surface **106**.

Similar as for the 1$^{st}$ aspect, the hard layer may be a thin layer having a thickness below 20 $\mu$m and a hardness preferably above 0,5 GPa, that covers homogeneously the surface of a tool, without changing its surface topography - as explained in the glossary.

The virgin base surface or the polished base surface may comprise for example metal, or ceramics, in bulk or layer form.

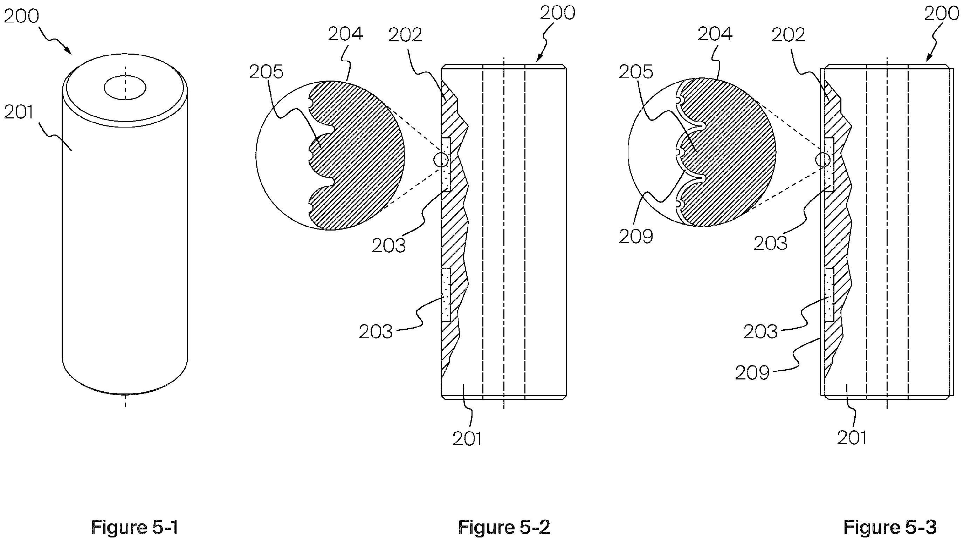

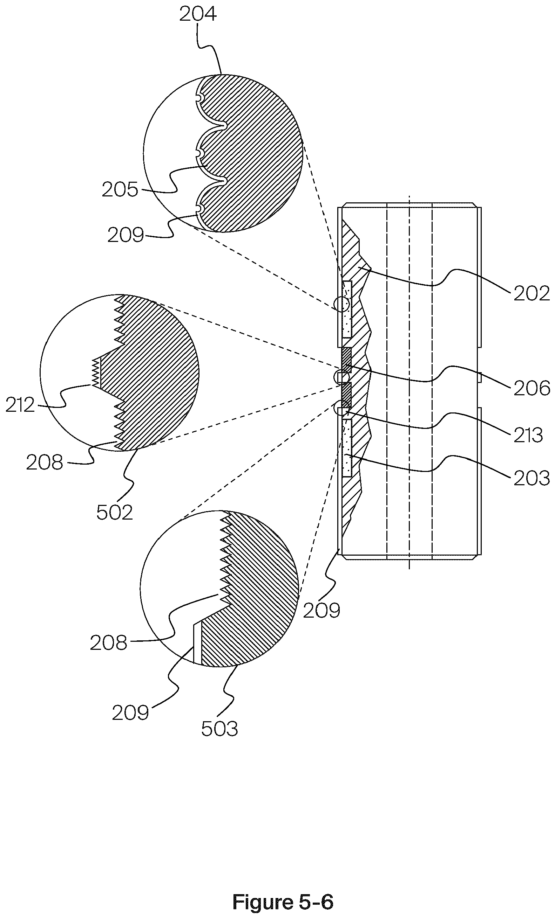

Different stages of the method according to the first aspect as illustrated in figure 4 are illustrated in an example as different stages of engraving of a cylindrical embossing tool in figures 5-1 to 5-6.

Figure 5-1 shows the cylindrical embossing tool **200** or roller with the polished base surface **201** obtained from polishing the virgin base surface of the cylindrical embossing tool **200**. Note that this is the same type of polished base surface **201** as shown in figure 2-1.

Figure 5-2 shows the part **202** of a sectional view of the cylindrical embossing tool **200**. Note that sizes and proportions of elements illustrated in the figures do not correspond to real sizes and/or proportions and have been adapted for a better readability. This sectional view is obtained after execution of the previously explained method step **400** of engraving the first code pattern **C-1** on the polished base surface **202**. The first code pattern **C-1** is engraved in a plurality of first zones **203**. An enlarged view **204** at a surface of a first zone **203** shows first structures **205** that are comprised in the first code pattern **C-1**.

Figure 5-3 shows the part **202** after the previously explained step of depositing the hard layer **104** is executed. The hard layer **209** is deposited on the polished base surface **201** and hence covers the first structures **205** in the first zones **203**, and thereby reproduces the topography of the first structures **205**.

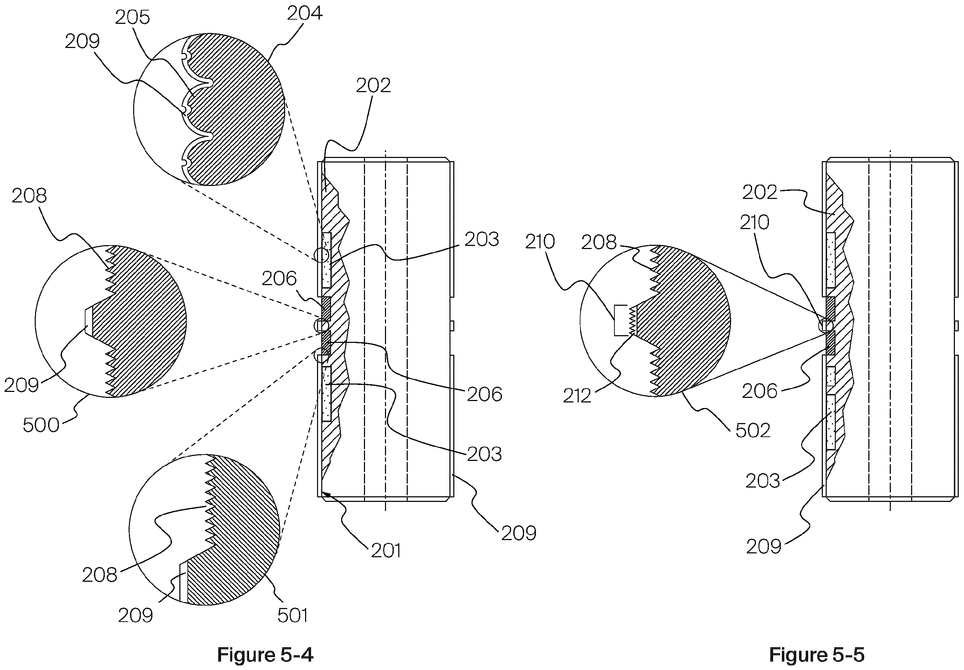

Figure 5-4 shows the part **202** which results from the method step **401** in which the second code pattern **C-2** has been engraved in a plurality of second zones **206** through the hard layer **209** into the polished base surface **201**. The second zones **206** are distinct from the first zones **203**. Enlarged views **500** and **502** at surfaces of the second zones **206** show second structures **208** that are comprised in the second code pattern **C-2**.

Figure 5-5 shows the part **202** after execution of the previously explained step of engraving the third code pattern **C-3** in the hard layer **209**. The third code pattern **C-3** is engraved in third zones **210** distinct from the first zones **203** and the second zones **206**, meaning that the third zones **210** correspond to parts of the hard layer **209** that do not overlap the first zones **203** and the second zones **206**. A magnified view **502** illustrates the third structures **212** engraved in the third zone **210** corresponding to the magnified view **502**.

Figure 5-6 shows a schematic overview of the part **202** obtained after execution of all the steps of the method according to the second aspect. In this particular example there may be at least one zone **213** in which the hard layer **209** is not engraved with the third structures **212**. A magnified view **503** of a part of the zone **213** adjacent to the zone **206** shows the part of the hard layer **209** without any third structures, and an adjacent part with second structures **208**.

The main advantage here is the perfect readability of the second structures **208** of code pattern **C-2**, that will be the result from a later embossing. The invention found the laser parameter enabling an engraving through the hard layer without damaging the adjacent coated zones, without inducing delamination or weak points at the boundaries of the zones **209** that remained coated.

The point to take care of is the ground material of the roller, to be chosen from a material with high corrosion resistance, e.g., out of stainless steel or ultrafine (e.g., grain size below 5 $\mu$m) sintered ceramics.

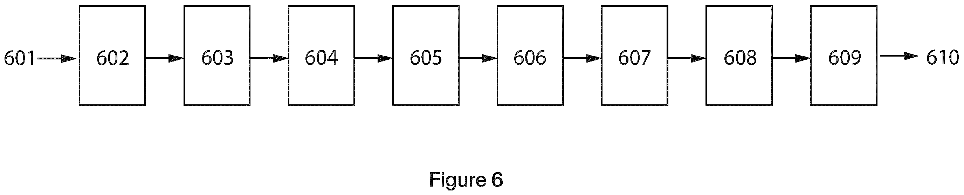

Referring now to figure 6, this contains a schematic representation of a production line for manufacturing an engraved embossing tool surface **610** departing from a virgin surface **601** according to the second aspect of the inventive method. Individual machines in this production line are represented as boxes **602** to **609**, a number of which will be detailed herein below with the example machines illustrated in figures 7 to 9. Generally speaking, the machines in figure 6 are well known in the art and do not require any detailed description. The virgin base surface **601** is treated by means of a polishing machine **602** to obtain a polished base surface. The latter is then subjected to a laser engraving machine **603**, at which the first code pattern are engraved in the polished base surface. The so engraved polished base surface may then optionally be cleaned by means of a cleaning machine **604** before being subjected to a hard layer deposition machine **605** which deposits a hard layer on the polished base surface which includes the engraved first code pattern. The hard layer carrying polished base surface is then subjected to a further laser engraving machine **606** at which the second code pattern is engraved through the hard layer into the polished base surface. This is then subjected to an optional cleaning machine **607**. The hard-layer-carrying polished base surface is then subjected to a further laser engraving machine **608** where the third code pattern is engraved in the hard layer. Finally, an optional plasma etching machine **609** applies a final treatment to obtain the engraved surface **610**.

*Examples of machines used to engrave surface structures making up code patterns*

As inspired from international publication WO 2013/156256, figure 7 contains a schematic representation of a laser engraving machine **700** for engraving a roller tool **701** having a cylindrical geometry. This type of engraving machine may engrave first structures of a first code pattern (not illustrated) and/or second structures of a second code pattern (not illustrated) on the surface of the roller tool **701**, either on its polished base surface or through a hard layer that may cover the polished base surface at the time of engraving.

A laser **702** may typically be an ultrashort-pulsed laser operating between 100 kHz and 10 MHz with an average power between 1 W and 500 W. A laser beam **703** from the laser **702** is directed with a set of dielectric mirrors **704**. The laser beam **704** is modulated with the help of an acousto-optical modulator **705** that will deflect or not the laser according to a commanding signal from a Numerical Control **706**. Passing laser light **707** is sent to a beam expander **708** that is used to increase the diameter of the laser beam **707**. This allows focusing the laser beam into a smaller spot **709** for engraving, using a focusing lens **710**.

The roller tool **701** is held in a set of mechanical axes **711** driven by motors (not illustrated), allowing a rotation of the roller tool **701** along its axis **712** and a translation of the roller tool **701**. The Numerical Control **706** is programmed to send signals to these motors to rotate and translate the roller tool **701** during the engraving of the surface of the roller tool **701**. The Numerical Controller **702** also sends signals to the laser **702** to trigger the laser pulses according to the code pattern to be engraved.

Figure 8 contains a schematic representation of a laser engraving machine **800** for a freeform surface **801**. This type of engraving machine may engrave first structures of a first code pattern (not illustrated) second structures of a second code pattern (not illustrated) on the freeform surface **801**, either on its polished base surface or through a hard layer (not illustrated) that may cover the polished base surface at the time of engraving.

A laser **802** may typically be an ultrashort-pulsed laser operating between 100 kHz and 10 MHz, with an average power between 1 W and 500 W. A laser beam **803** from the laser **802** is directed with a set of dielectric mirrors **804** towards a beam expander **805**. The beam expander **805** increases a diameter of the laser beam **803**. A focus shifter **806** changes the divergence of the expanded laser beam **807** to translate the focusing spot **808** for engraving in the direction of the optical path to follow the freeform surface **801**. A scanner head **809** directs the laser beam **807** and an f-theta lens **810** focuses the laser beam on the freeform surface **801**.

The freeform surface **801** is mounted on a 5 axes machine **811**. A Numerical Control **812** is programmed to send signals to the 5 axes machine **811** and the scanner head **809** to direct respectively the freeform surface **801** and the focusing laser spot **808** correctly. The Numerical Control **812** also sends signals to the laser **802** to trigger the output of laser pulses according to the code pattern to be engraved.

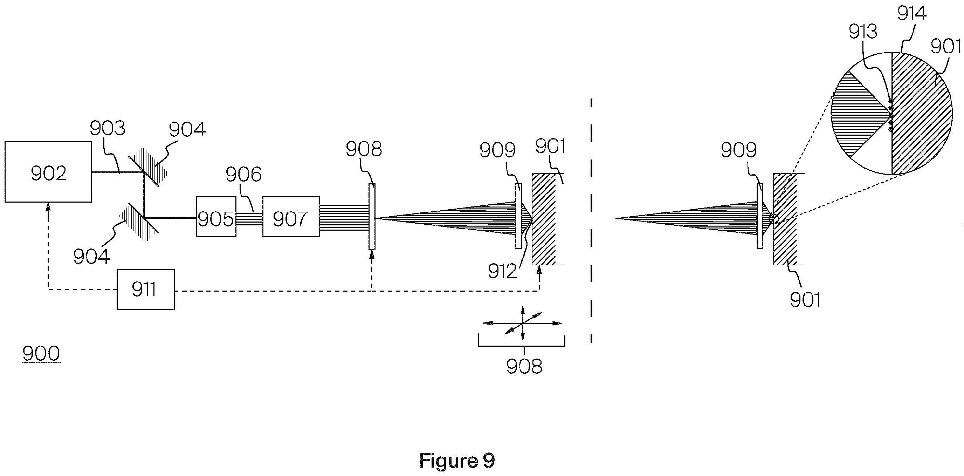

As inspired from WO 2015/173735, figure 9 contains a schematic representation of a laser engraving machine **900** for a solid piece's tool surface **901**. The machine **900** may engrave third structures of a third code pattern (not illustrated) on the surface **901** with a hard layer (hard layer not illustrated).

A laser **902** is typically an ultrashort-pulsed laser operating between 100 kHz and 10 MHz, with an average power between 1 W and 500 W. The laser **902** may also be an excimer laser operating at a few 10 Hz, with an average power between 0.5 W and 10 W. A laser beam **903** from the laser **902** is directed with a set of dielectric mirrors **904** towards a beam expander **905**. The beam expander **905** increases a diameter of the laser beam **903**. A beam shaper **907** changes a profile of the expanded laser beam **906** from a Gaussian profile to a top-hat profile (profiles not illustrated). This top-hat profile illuminates a mask **908** containing a code pattern (not illustrated) that corresponds to an entire third code pattern or a sub part of the third code pattern to engrave on the solid piece tool's surface **901**. The mask **908** may be a transparent plate with a reflective coating (not illustrated) that was removed by photolithography or direct laser etching. The mask **908** may also be a transparent plate where the code pattern was engraved to create opaque areas where the expanded laser beam **906** is scattered. An objective **909** makes the image of the mask **908** on the surface **901** to engrave with a given magnification ratio, between 5:1 and 100:1.

The solid piece's tool surface **901** to engrave is fixed on a set of mechanical axes **901** controlled with motors (not illustrated). A Numerical Control **911** is programmed to send signals to the motors and move the solid piece's tool surface **901** to engrave in relation to a focusing spot **912** of the laser **902**. The Numerical Control **911** also sends signals to the laser **902** to trigger the output of laser pulses according to the code pattern to be engraved.

In a further embodiment of the invention, as shown in the enlarged view **914** in figure 9, the beam shaper **907** and the mask **908** containing a code pattern can be substituted by a beam splitting device (not illustrated in figure 9), also controlled by a Numerical Control **911**. The beam splitting device splits the laser beam **903** into a plurality of beams (not individually depicted in figure 9) that are focused by the objective **909**, obtaining a plurality of foci **913** to engrave third structures into the solid piece's tool surface **901**.

*Differences between embossing tools manufactured according to the first and the second aspect*

The differences of engraving a solid piece's tool surface, e.g., an embossing tool, with the first, second and third structures using the methods and/or manufacturing processes according to herein above described first and second aspects are not visible by the observation of the embossing tool with the naked eye. In order to see differences, it may be necessary to make use of special tools such as for example an electronic microscope. One of the differences that is comparatively difficult to identify by observation is that with the first aspect the second code pattern **C-2** is eventually overlaid by the hard layer **209**, while with the second aspect it is not overlaid by the hard layer **209**. This difference does not have any noticeable effect on the capacity of the embossing tool to be used to emboss the engraved second code pattern in an embossing process. In other words, the differences achieved in the embossing tool between the first and the second aspect may not produce any differentiated results when embossing, meaning that a product embossed according to an embossing tool obtained through the first aspect has a substantially an identical aspect than a product embossed with the same pattern but according to an embossing tool obtained through the second aspect.

Accordingly, the example engraved and embossed products described in the following paragraphs, may indistinguishably be obtained according to solid pieces' tool surfaces manufactured according to the first aspect or the second aspect.

*Examples of realization of code patterns*

According to a preferred embodiment, the first and/or second code pattern structures are arranged according to an ordered map produced by means of the encoding algorithm, and this allows knowing where each of the code pattern structures may be found, in order to reconstitute and retrieve the encoded information. In a preferred embodiment, an ordered map of, e.g., 33 lines and 33 rows, comprises within itself a small set of, e.g., 64 code pattern structures that represent a specific information. At the time of the optical information retrieving, an image sensor acquires an image of at least a part of the ordered map, and the image is transmitted subsequently to an image processor. The image processor is programmed such that it knows where the code pattern structures may be found on the engraved surface, and it recovers the information encoded on the engraved surface and/or of a product embossed therewith.

The following exemplifies modulations used as preferred elements of the encoding algorithm, which are of typical use to obtain first and/or second code pattern structures' profiles from base surface structure's base profile, according to the information to be encoded.

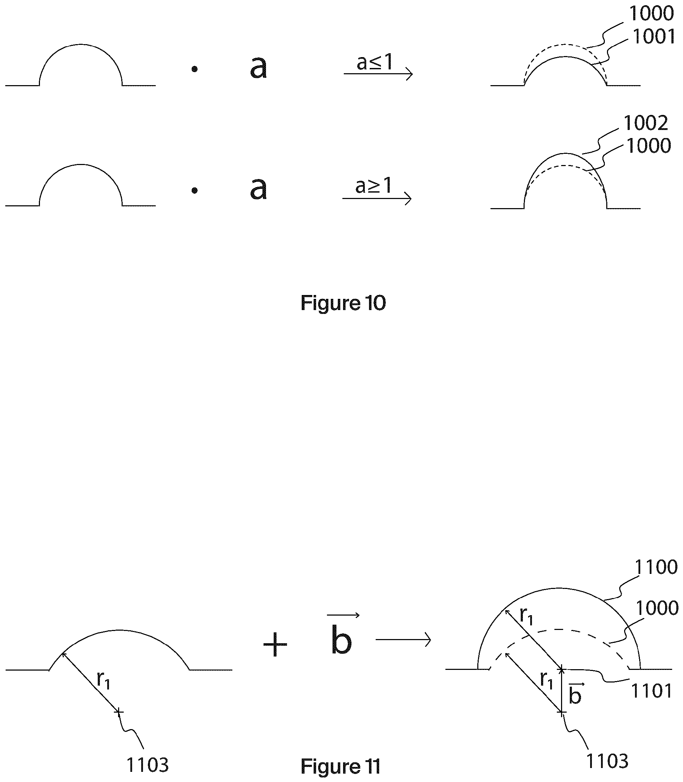

The multiplicative modulation allows height modulation or polarity flipping (positive to negative and vice-versa) of the complete base surface structures. Referring to figure 10, this contains schematic examples of multiplication modulation by a factor a, wherein two situations, one in which a < 1 and another one in which a > 1, are depicted. In the example in which a < 1, the height modulation reduces the height of the base structure **1000** to obtain a modulated structure **1001** with reduced amplitude, and in the example in which a > 1, the height modulation increases the height of the base structure **1000** to obtain a modulated structure **1002**.

The offsetting modulation permits a height modulation of the complete base surface structure. Figure 11 illustrates an example of z-offsetting modulation of a hemispherical base surface structure, where the center **1103** is translated by vector $\vec{b}$ in z-direction to the new center **1101**. Hence, the base structure **1000** is translationally elevated by an amount of vector $\vec{b}$ to obtain modulated structure **1100**. This supposes that the base structure **1000** possesses a virtual shape below the surface from which the base structure is elevated.

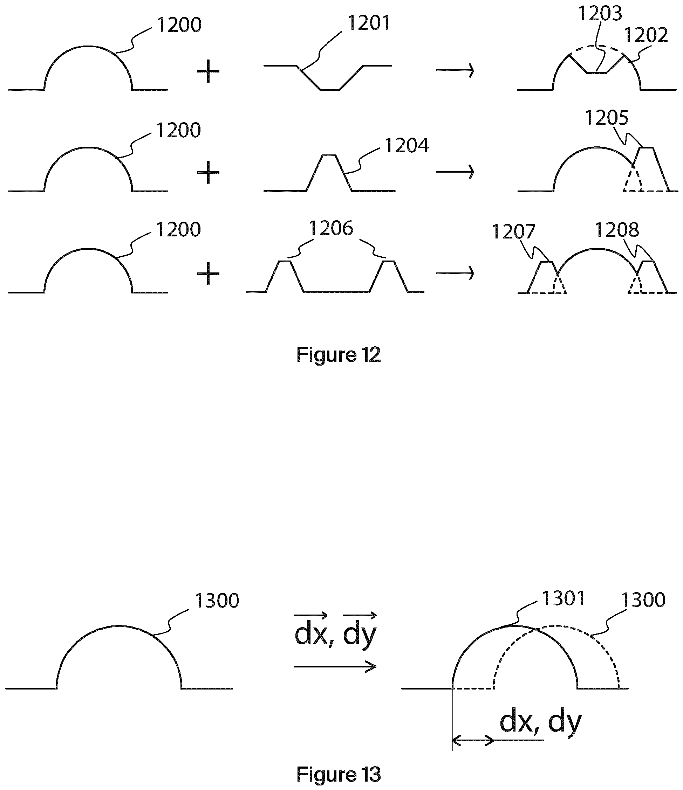

The additive modulation, which also covers the subtraction case, allows for adding a position-dependent structure to the base surface structure. Figure 12 demonstrates three examples, where one or several cone structures are added onto a hemispherical base surface structure **1200** at various positions, obtaining three different code pattern structures. In the example illustrated in the upper part of figure 12, a cone structure **1201** added to the base structure **1200** results in a modulated structure **1202** having a cone shaped cavity **1203** on top of the hemispherical shape. In the middle part of figure 12, a further cone structure **1204** shaped as a positive structure is added to the base structure **1200** and results in the cone structure merging into a right side **1205** of the hemispherical shape. In the lower part of figure 12, two even further cone structures **1206** shaped as two positive structures distant from each other by less than a base diameter of the base structure **1200,** results in the cone structures merging into respective left **1207** and right **1208** sides of the hemispherical shape.

Figure 13 demonstrates a further offsetting modulation, in which a code pattern structure **1301** appears as a laterally moved version of base surface feature **1300** in the (x,y)-plane, wherein the lateral movement is by a vector $\vec{d_x}$ and/or $\vec{d_y}$.

Various types of modulation may also be combined by modulating more than one parameter. This might be desired to produce a stronger effect when required, e.g., a more pronounced effect on intensity of light reflected by the so-obtained modulated structure in order to facilitate a read-out and retrieval by means of a software-driven image-sensor/processor combination.

According to a preferred embodiment of the invention, the third structures of third code pattern may be computed using an Iterative Fourier Transform Algorithm that uses a computer-generated random optical phase and a computer-generated blank image as an input.

In a first iteration step, a first complex image is computed from the random optical phase and the blank image. A Fourier transform is applied to this first complex image and the corresponding optical phase is extracted.

In a second iteration step, the first extracted optical phase is combined with the image information to be encoded and a second complex image is computed. The inverse Fourier transform is applied to the second complex image and the corresponding optical phase is extracted.

The second extracted optical phase is combined with the computer-generated blank image and a third complex image is obtained. The Fourier transform is applied to the third complex image and the corresponding optical phase is extracted.

This process is repeated until the extracted optical phase does not vary anymore (e.g., from 10 to 100 times) and a final complex image and a final phase are obtained.

The final phase is used to obtain the height profile of the third structures according to the formula:

$$h = \varphi \cdot \lambda / (2\pi)$$

wherein h denotes a profile height, $\varphi$ the optical phase, and $\lambda$ is the wavelength of the reading beam **1703**.

*Examples of embossed products*

A typical application derived from the use of the method according to the present invention to engrave an embossing tool surface, and then to emboss a product using the embossing tool surface, is to authenticate the embossed product by taking a picture of its embossed surface, processing the picture to identify possible code pattern zones and to retrieve the information contained in such code pattern zones.

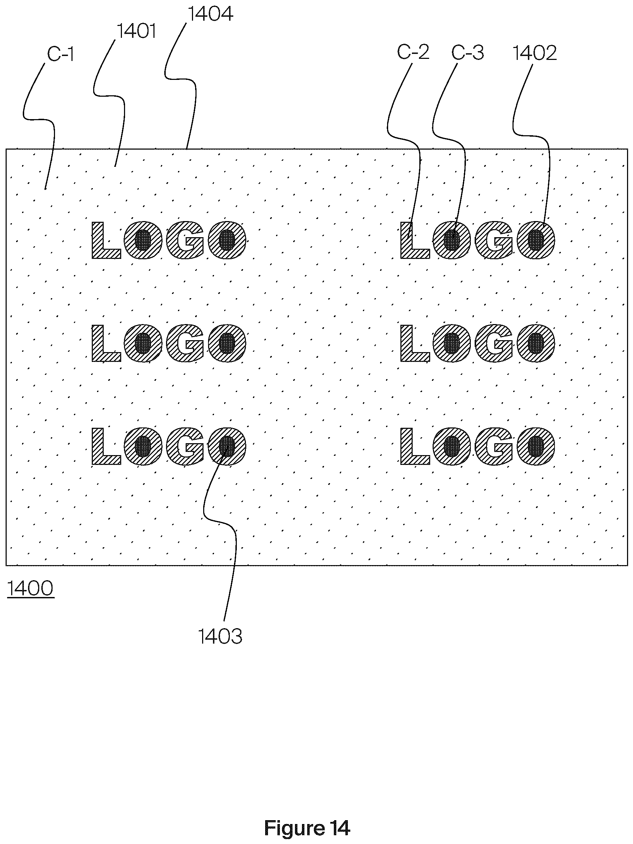

Referring to figure 14, a product **1400** obtained by making use of a preferred embodiment of the invention as explained in the preceding paragraph, may consist in an embossed foil **1404** comprising embossed base surface structures (for example having hemispherical shape and regularly aligned on a grid - not shown in the figure 14), surrounding first code pattern **C-1** zones, which in turn comprise embossed first structures **1401**. In a particular realization, the embossed first structures **1401** are obtained from base surface embossing structures through an encoding algorithm using an additive modulation, allowing for adding a position-dependent structure to the base surface structures. Figure 12 illustrates an example of such additive modulation, where one cone feature is added onto a hemispherical base surface structure.

The described product **1400** also includes second code pattern **C-2** zones building the word "LOGO" and with embossed second structures **1402** constituting a texture of the each of the letters. In a particular realization, the embossed second structures **1402** may be obtained from base surface embossing structures through an encoding algorithm using an offsetting modulation, in which code pattern structures appears as a laterally moved version of a base surface structure in the (x,y)-plane of the surface of the foil, wherein the lateral movement is by a vector $\vec{dx}$ and/or $\vec{dy}$ as shown in figure 13.

The described product **1400** further comprises third code pattern **C-3** zones covering the surface of inner circles in the two letters "O" of the word "LOGO". These third code pattern **C-3** zones comprise embossed third structures **1403**.

The encoding algorithms may be used for each type of structures, i.e., for the first structures, the second structures and the third structures. A different determined encoding algorithm may be selected and used for respective type of first, second and third structure. Hence it is for example possible to use three different encoding algorithms.

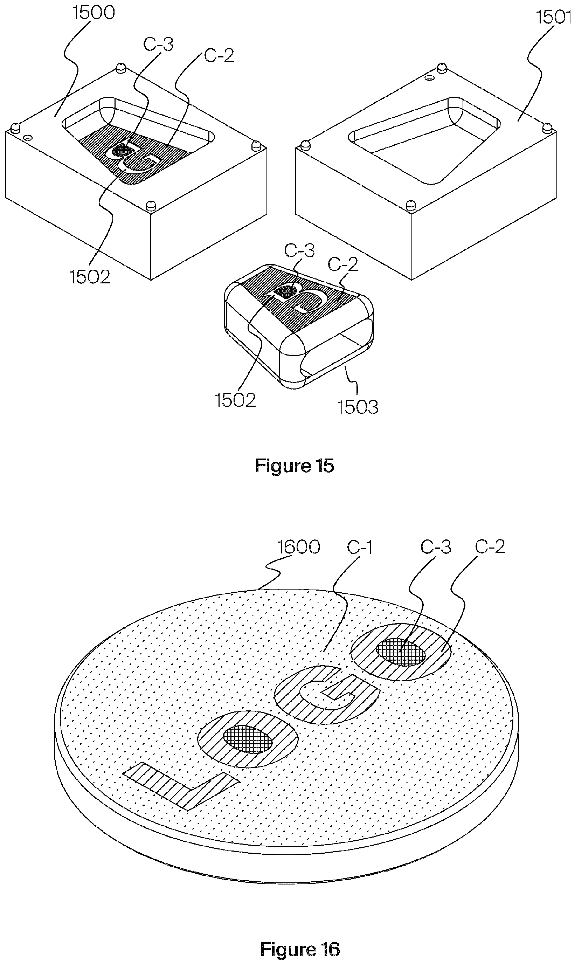

Referring now to figure 15 this discloses an example of an injection molding form comprising two halves **1500** and **1501** which may be used to mold a product **1503**. The first half **1500** of the injection mold is engraved according to any method of the present invention, and accordingly comprises a second code pattern zone comprising at least a second code pattern **C-2** with second structures and a styled letter "B" which in one of its inner surfaces comprise a third code pattern zone comprising at least a third code pattern **C-3** with third structures. A surface **1502** making up the letter "B" is without any code pattern, which is configured to emboss light diffracting surfaces. The molded product **1503** itself comprises corresponding embossed structures of the at least one second code pattern **C-2** and the at least one third code pattern **C-3**, and an embossed surface corresponding to the surface **1502** and hence configured to diffract light falling on it.

Referring now to figure 16, this illustrates an example of a coin-like product **1600** engraved according to any one of the methods according to the invention. Accordingly, a surface of the coin like product **1600** comprises at least an embossed first code pattern **C-1** with first structures, and letters making up the word "LOGO" the surfaces of which are textured with at least an engraved second code pattern **C-2** with second structure. The inner oval shaped surface of the two letters "O" are engraved with at least an embossed third code pattern **C-3** with third structures.

*Examples of reading processes for reading and identifying the various embossed codes on a product*

*Reading of and information retrieving from the first code pattern*

Preferably the encoding algorithm used to generate the engraved encoding features of the first code pattern, i.e., the first structures are designed in such a manner that these features have sizes that could still be observed and focused on by an optic system of a commonly used device, such as a smartphone or a camera, which becomes a reading device. The reading device disposes of a decoding algorithm and is able to

- acquire an image of the first code pattern zone comprising the first code pattern;
- treat this image and identify the encoding features;
- analyze these features and retrieve the encoded information.

For example, in case of a smartphone the built-in camera will be used for image acquisition and an initially loaded software will treat the acquired images and retrieve the encoded information.

*Reading of and information retrieving from the second code pattern*

Complementary to the first code pattern, the encoding algorithm used to generate the engraved encoding features of the second code pattern, i.e., the second structures is designed in such a manner that these features have sizes that can't be resolved by commonly used devices, such as the built-in optical system of a smartphone or a camera. An additional optical means is then necessary to resolve and focus on the encoding features, for example a clipped magnifying lens (e.g., 10x) for the smartphone or a portable microscope.

By this fact, the targeted public for the second code pattern is shifted from the broad consumer audience of a given product to a more specialized public.

The reading device disposes of an additional optic means and of the decoding algorithm and is able to

- acquire a sharp image of the second code pattern zone comprising the second code pattern;
- treat this image and identify the encoding features;
- analyze these features and retrieve the encoded information.

*Reading of and information retrieving from the third code pattern*

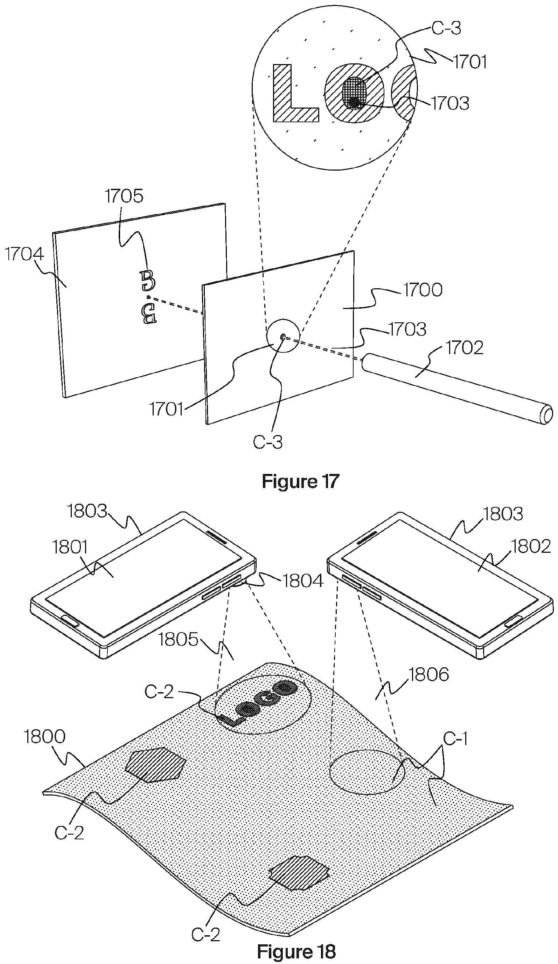

The premises of the third code pattern may rely on the physical phenomenon of light diffraction on at least one surface grating. The encoding algorithm calculates the at least one grating that, upon illumination with a reading beam, e.g., a laser beam, will retrieve the encoded information.
Therefore, the third code addresses preferably a specialized public, disposing of and knowing to use such reading devices, e.g., a laser beam, for instance coming from a commercial laser pointer.
To retrieve the information encoded in the third code zone pattern, a reading device delivering a reading beam and a reading screen are used. The reading beam impinges onto the surface zone containing the third code pattern and the later reflects the incident light in such a manner, that the encoded information is reproduced onto the reading screen.
In the following a few examples of set-ups for reading code patterns are explained by looking at figures 17, 18 and 19.
Referring to figure 17, this illustrates a set-up for reading a third code pattern **C-3** from a foil **1700** embossed according to an example method of the invention. The foil may for example be like the foil illustrated in figure 14 and referenced **1400**, that comprises third code pattern **C-3** zones covering the surface of inner circles in the two letters "O" of the word "LOGO". These third code pattern **C-3** zones as illustrated in the magnified view **1701** comprise embossed third structures. As explained hereinabove, a laser **1702** is used as a reading device that emits a reading beam **1703** impinging on the surface zone containing the third code pattern **C-3,** whereby this surface zone is translucid to the reading beam, and the transmitted light is projected on a screen **1704** where the encoded information is reproduced in at least a projection **1705**.
Referring now to figure 18, this schematically illustrates two set-ups for reading two different types of code patterns from a product **1800** embossed according to an example method of the invention. The embossed product comprises embossed second code patterns **C-2** and embossed first code patterns **C-1**. Figure 18 shows examples of the herein above explained different systems **1801** and **1802** respectfully configured to read embossed second code patterns **C-2** and embossed first code patterns **C-1**. Each system **1801** and **1802** comprises a smartphone **1803** as a reading device, but the system **1801** in addition comprises a magnifying lens **1804** clipped onto the standard lens of system **1801**. The figure 18 also schematically shows viewing angles **1805** and **1806** corresponding to the systems **1801** and **1802**.

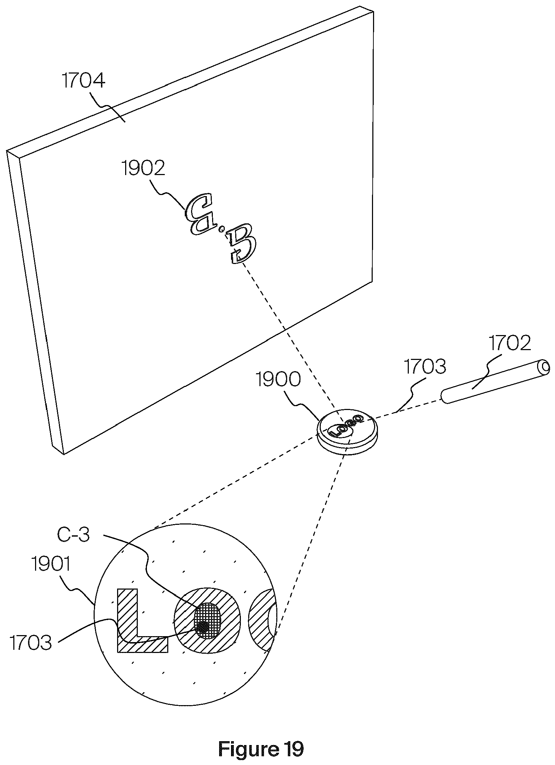

The figure 19 schematically illustrates a set-up for reading a coin like **1900** product such as the one illustrates in figure 16. The coin like product **1900** comprises at least a third code pattern **C-3** zone covering the surface of inner circles in the two letters "O" of the word "LOGO", as may be seen in magnified view **1901**. This at least one third code pattern **C-3** zones comprises engraved third structures. As explained hereinabove, a laser **1702** is used as a reading device that emits a reading beam **1703** impinging on the surface zone containing the third code pattern **C-3**, whereby this surface zone is reflective of the reading beam **1703**, and the reflected light is projected on a screen **1704** where the encoded information is reproduced in at least a projection **1902.**

**Claims**

1.  A method for engraving a solid piece's tool surface with a plurality of code patterns of structures, wherein the plurality of code patterns comprises

    a first code pattern comprising first structures with lateral sizes and pitches respectively in a range of 20 to 500 $\mu$m;
    a second code pattern comprising second structures with lateral sizes and pitches each in a range of 1 to 20 $\mu$m; and
    a third code pattern comprising third structures with lateral sizes and pitches each in a range of 0.2 to 5 $\mu$m;
    the method comprising
    providing a virgin base surface on the solid piece's tool surface;
    polishing the virgin base surface to obtain a polished base surface;
    depositing a hard layer on the polished base surface;
    engraving the third code pattern in the hard layer;
    the method being **characterized in that** it further comprises
    engraving the first code pattern and the second code pattern before the step of depositing the hard layer,
    wherein the hard layer reproduces the topography of the first code pattern and the second code pattern.

2.  The method for engraving of claim 1, wherein the engraved solid piece's tool surface

    has a cylindrical symmetry; and
    is configured for a transfer of the first, second, and third code pattern's first, second and third structures into a substrate,
    whereby the transfer is any one from the list comprising: shaping, printing, molding, crafting, pressing, embossing onto or into the substrate.

3.  The method for engraving of claim 1, wherein the engraved solid piece's tool surface

is configured to be used as a forming tool, for a transfer of the first, second, and third code pattern's first, second and third structures into a substrate,
whereby the transfer is any one from the list comprising: printing, molding, crafting, pressing, embossing into the substrate.

4. The method for engraving of claim 1, wherein the step of engraving the first code pattern and the second code pattern comprises engraving by means of an ultrashort-pulsed laser beam focused on the polished base surface providing from a laser operating between 100 kHz and 10 MHz with an average power between 1 W and 500 W.

5. The method for engraving of claim 1, wherein the step of engraving the third code pattern in the hard layer involves a laser and a mask projection of third structures by the laser on the hard layer, corresponding to the third code pattern to be engraved.

6. The method for engraving of claim 1, wherein the step of engraving the third code pattern in the hard layer involves a laser and a beam splitting device yielding a plurality of foci to engrave third structures into the hard layer corresponding to the third code pattern to be engraved.

7. A method for engraving a solid piece's tool surface with a plurality of code patterns of structures, wherein the plurality of code patterns comprises

a first code pattern comprising first structures with lateral sizes and pitches each in a range of 20 to 500 $\mu$m;
a second code pattern comprising second structures with lateral sizes and pitches each in a range of 1 to 20 $\mu$m; and
a third code pattern comprising third structures with lateral sizes and pitches each in a range of 0.2 to 5 $\mu$m;
the method comprising
providing a virgin base surface on the solid piece's tool surface;
polishing the virgin base surface to obtain a polished base surface;
depositing a hard layer on the polished base surface;
engraving the third code pattern in the hard layer;
the method being **characterized in that** it further comprises
engraving the first code pattern before the step of depositing the hard layer and
engraving the second code pattern through the hard layer into the polished base surface.

8. The method for engraving of claim 7, wherein the engraved solid piece's tool surface

has a cylindrical symmetry; and
is configured for a transfer of the first, second, and third code pattern's first, second and third structures into a substrate,
whereby the transfer is any one from the list comprising: shaping, printing, molding, crafting, pressing, embossing onto or into the substrate.

9. The method for engraving of claim 7, wherein the engraved solid piece's tool surface

is configured to be used as a forming tool, for a transfer of the first, second, and third code pattern's first, second and third structures into a substrate,
whereby the transfer is any one from the list comprising: printing, molding, crafting, pressing, embossing into the substrate.

10. The method for engraving of claim 7, wherein the step of engraving the first code pattern and the step of engraving the second code pattern each comprise engraving by means of an ultrashort-pulsed laser beam focused on the polished base surface providing from a laser operating between 100 kHz and 10 MHz with an average power between 1 W and 500 W.

11. The method for engraving of claim 7, wherein the step of engraving the third code pattern in the hard layer involves a laser and a mask projection of third structures by the laser on the hard layer, corresponding to the third code pattern to be engraved.

12. The method for engraving of claim 7, wherein the step of engraving the third code pattern in the hard layer involves a laser and a beam splitting device yielding a plurality of foci to engrave third structures into the hard layer corresponding to the third code pattern to be engraved.

13. An embossing tool with a plurality of code patterns as embossing structures, wherein the plurality of code patterns comprises

a first code pattern comprising first structures with lateral sizes and pitches each in a range of 20 to 500 $\mu$m;
a second code pattern comprising second structures with lateral sizes and pitches each in a range of 1 to 20 $\mu$m; and
a third code pattern comprising third structures with lateral sizes and pitches each in a range of 0.2 to 5 $\mu$m;
the embossing tool comprising:

a base;
a surface of the base configured to have the first and second structures arranged thereon;
a hard layer arranged at least on the first structures of the surface of the base; and
a surface of the hard layer comprising the third structures thereon.

14. The embossing tool of claim 13, wherein the base is cylindrical.

15. The embossing tool of claim 13, wherein the base comprises a plate that is made of a metallic or composite material.

16. An injection mold with a plurality of code patterns as molding structures,

wherein the plurality of code patterns comprises a first code pattern comprising first structures with lateral sizes and pitches each in a range of 20 to 500 $\mu$m;
a second code pattern comprising second structures with lateral sizes and pitches each in a range of 1 to 20 $\mu$m; and
a third code pattern comprising third structures with lateral sizes and pitches each in a range of 0.2 to 5 $\mu$m;
the injection mold comprising:

a base;
a surface of the base configured to have the first and second structures arranged therein;
a hard layer arranged on at least the first structures of the surface of the base;
a surface of the hard-coating layer comprising the third structures thereon.

17. A method for authenticating a surface-structured product bearing first, second and/or third code pattern zones on the surface of the product, wherein

the first code pattern comprises first structures with lateral sizes and pitches each in a range of 20 to 500 $\mu$m;
the second code pattern comprises second structures with lateral sizes and pitches each in a range of 1 to 20 $\mu$m; and
the third code pattern comprises third structures with lateral sizes and pitches each in a range of 0.2 to 5 $\mu$m;
the method comprising steps of:

capturing an image from a first code pattern zone on the product comprising at least one first code pattern, with a camera that is associated with a first data-processing device;
analyzing the captured image at the first data-processing device and retrieving the information contained in the at least one first code pattern according to a first encoding algorithm;
capturing an image from a second code pattern zone on the product comprising at least one second code pattern with a camera that is completed by an auxiliary optical means, and which is associated with the first data-processing device;
analyzing the captured image at the first data-processing device and retrieving the information contained in the least one second code pattern according to a second encoding algorithm;
illuminating at least a part of a third code pattern zone comprising at least one third code pattern, with a reading beam and using a reading screen to receive the reading beam projected through the or reflected by the at least one third code pattern to retrieve the information contained in the third code pattern.

Figure 1

Figure 2-3

Figure 2-2

Figure 2-1

Figure 2-4

Figure 2-5

Figure 2-6

301 → 302 → 303 → 304 → 305 → 306 → 307 → 308

Figure 3

Figure 4

Figure 5-1

Figure 5-2

Figure 5-3

EP 4 177 057 A1

Figure 5-5

Figure 5-4

Figure 5-6

601 → [ 602 ] → [ 603 ] → [ 604 ] → [ 605 ] → [ 606 ] → [ 607 ] → [ 608 ] → [ 609 ] → 610

Figure 6

Figure 7

Figure 8

Figure 9

Figure 10

Figure 11

Figure 12

Figure 13

C-1  1401  1404          C-2  C-3  1402

LOGO          LOGO

LOGO          LOGO

LOGO          LOGO

1400

1403

Figure 14

Figure 15

Figure 16

Figure 17

Figure 18

1704

1902

1702

1703

1900

C-3

1901

1703

Figure 19

Europäisches
Patentamt

European
Patent Office

Office européen
des brevets

# EUROPEAN SEARCH REPORT

**Application Number**

EP 21 20 6752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/243094 A1 (BOEGLI CHARLES [CH]) 27 September 2012 (2012-09-27) | 13,14 | INV. B41C1/02 |
| A | * paragraph [0017] – paragraph [0062]; figures 1-8 * | 1-12,15, 16 | B44B5/00 B29C45/37 |
| X | EP 3 037 253 A1 (BOEGLI GRAVURES SA [CH]) 29 June 2016 (2016-06-29) | 13,14 | ADD. B41C1/05 |
| A | * paragraph [0011] – paragraph [0156]; figures 1-61 * | 1-12,15, 16 | |
| X | WO 2018/176090 A1 (CCL SECURE PTY LTD [AU]) 4 October 2018 (2018-10-04) | 13,14 | |
| A | * paragraph [0001] – paragraph [0069]; figures 1-6 * | 1-12,15, 16 | |
| X | LINFA PENG ET AL: "Micro hot embossing of thermoplastic polymers: a review", JOURNAL OF MICROMECHANICS AND MICROENGINEERING, INSTITUTE OF PHYSICS PUBLISHING, BRISTOL, GB, vol. 24, no. 1, 12 December 2013 (2013-12-12), page 13001, XP020255912, ISSN: 0960-1317, DOI: 10.1088/0960-1317/24/1/013001 [retrieved on 2013-12-12] * Sections 3.-7.; figures 1,2 * | 13-15 | **TECHNICAL FIELDS SEARCHED (IPC)** B41C B44F B29C B44B |
| X | US 2010/108638 A1 (GAVILLET JEROME [FR] ET AL) 6 May 2010 (2010-05-06) * paragraph [0018] – paragraph [0056] * | 16 | |
| A,D | WO 2013/156256 A1 (BOEGLI GRAVURES SA [CH]) 24 October 2013 (2013-10-24) * page 1, line 3 – page 25, line 18; claims 1-25; figures 1-40 * | 1-16 | |

~~The present search report has been drawn up for all claims~~

| Place of search | Date of completion of the search | Examiner |
|---|---|---|
| Munich | 3 May 2022 | Patosuo, Susanna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 21 20 6752

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-16**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

**EP 21 20 6752**

The Search Division considers that the present European patent application does not comply with the requirements of unity of invention and relates to several inventions or groups of inventions, namely:

```
1. claims: 1-16

   Claims 1 and 7 relate to a method for engraving a solid
   piece's tool surface with plurality of code patterns of
   structures. Claim 13 relates to a corresponding embossing
   tool and claim 16 to an injection mold comprising the
   engraved code patterns.
                           ---

2. claim: 17

   Claim 17 defines a method for authenticating a
   surface-structured product bearing first, second and/or
   third code pattern zones on the surface of the product.
                           ---
```

## ANNEX TO THE EUROPEAN SEARCH REPORT
## ON EUROPEAN PATENT APPLICATION NO.

EP 21 20 6752

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2022

| Patent document cited in search report | | | Publication date | Patent family member(s) | | | Publication date |
|---|---|---|---|---|---|---|---|
| US 2012243094 | A1 | | 27-09-2012 | BR | 112012014869 | A2 | 29-03-2016 |
| | | | | CA | 2781475 | A1 | 23-06-2011 |
| | | | | CN | 102792193 | A | 21-11-2012 |
| | | | | EP | 2336810 | A1 | 22-06-2011 |
| | | | | EP | 2513687 | A1 | 24-10-2012 |
| | | | | JP | 5905394 | B2 | 20-04-2016 |
| | | | | JP | 2013514539 | A | 25-04-2013 |
| | | | | RU | 2012124337 | A | 27-09-2014 |
| | | | | US | 2012243094 | A1 | 27-09-2012 |
| | | | | WO | 2011072408 | A1 | 23-06-2011 |
| EP 3037253 | A1 | | 29-06-2016 | CN | 107206724 | A | 26-09-2017 |
| | | | | EP | 3037253 | A1 | 29-06-2016 |
| | | | | EP | 3237196 | A1 | 01-11-2017 |
| | | | | EP | 4011607 | A1 | 15-06-2022 |
| | | | | RU | 2017124393 | A | 24-01-2019 |
| | | | | US | 2017282635 | A1 | 05-10-2017 |
| | | | | WO | 2016103144 | A1 | 30-06-2016 |
| WO 2018176090 | A1 | | 04-10-2018 | AU | 2017100354 | A4 | 04-05-2017 |
| | | | | FR | 3064210 | A1 | 28-09-2018 |
| | | | | WO | 2018176090 | A1 | 04-10-2018 |
| US 2010108638 | A1 | | 06-05-2010 | AT | 516130 | T | 15-07-2011 |
| | | | | EP | 2181824 | A1 | 05-05-2010 |
| | | | | ES | 2369177 | T3 | 28-11-2011 |
| | | | | FR | 2937895 | A1 | 07-05-2010 |
| | | | | JP | 2010115922 | A | 27-05-2010 |
| | | | | US | 2010108638 | A1 | 06-05-2010 |
| WO 2013156256 | A1 | | 24-10-2013 | BR | 112014025767 | B1 | 22-06-2021 |
| | | | | CN | 104245299 | A | 24-12-2014 |
| | | | | DE | 202013012131 | U1 | 26-06-2015 |
| | | | | EP | 2838721 | A1 | 25-02-2015 |
| | | | | ES | 2893098 | T3 | 08-02-2022 |
| | | | | MX | 348059 | B | 25-05-2017 |
| | | | | PL | 2838721 | T3 | 27-12-2021 |
| | | | | RU | 2014142362 | A | 10-06-2016 |
| | | | | SG | 11201405930W | A | 27-11-2014 |
| | | | | US | 2015059599 | A1 | 05-03-2015 |
| | | | | WO | 2013156256 | A1 | 24-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20121019741 A1
- WO 2013156256 A
- WO 2015173735 A